Europäisches Patentamt

European Patent Office

Office européen des brevets

(19)

(11) Veröffentlichungsnummer: **0 354 370**

**A1**

(12) ## EUROPÄISCHE PATENTANMELDUNG

(21) Anmeldenummer: **89112767.2**

(22) Anmeldetag: **12.07.89**

(51) Int. Cl.⁴: **H04N 7/15**

(30) Priorität: **28.07.88 DE 3825731**

(43) Veröffentlichungstag der Anmeldung:
**14.02.90 Patentblatt 90/07**

(84) Benannte Vertragsstaaten:
**AT CH DE FR GB IT LI SE**

(71) Anmelder: **Siemens Aktiengesellschaft
Wittelsbacherplatz 2
D-8000 München 2(DE)**

(72) Erfinder: **Seen, Manfred, Dipl.-Ing. (FH)
Sommerstrasse 18
D-8120 Weilheim(DE)**

(54) **Videokonferenzsystem.**

(57) Bei diesem Arbeitsplatz-Videokonferenzsystem wird bei n-Teilnehmern ein Mischbild mit jeweils n - 1 Teilbildern erzeugt. Die Kamerasignale werden bereits datenreduziert in einen Teilbildspeicher (TBS) asynchron eingeschrieben und synchron mit einem Vollbildtakt ausgelesen.

## FIG 1

EP 0 354 370 A1

## Videokonferenzsystem

Die Erfindung betrifft ein Videokonferenzsystem nach dem Oberbegriff des Patentanspruches 1.

Videokonferenzen sind meist als sogenannte Besprechungszimmer-Videokonferenzen bekannt. Dabei ist es üblich, daß sich die Teilnehmer einer Gruppe A in einem Videokonferenzraum einfinden und zu einer an einem anderen Ort sich einfindenden Konferenzgruppe B eine elektronische Bewegbild- und Tonverbindung herstellen. Eine weitere Möglichkeit erschließt die Videokonferenz, bei der mehrere Konferenzräume an verschiedenen Orten zu einer einzigen Videokonferenz verbunden sind. Eine Sonderform hiervon ist die sogenannte Arbeitsplatz-Videokonferenz. Hierbei ist jedem Teilnehmer an seinem Arbeitsplatz ein eigenes Bildtelephon mit Kamera und Monitor zugeordnet. Die Konferenzteilnehmer brauchen sich nicht mehr in besonderen Videokonferenzräumen einzufinden, sondern können direkt mit ihrem eigenen Bildfernsprecher an der Videokonferenz teilnehmen. Ebenso sind natürlich Mischformen möglich, bei der eine Konferenzgruppe mit Einzelteilnehmern zusammengeschaltet ist. In der deutschen Offenlegungsschrift 35 07 152 ist ein Nachrichtensystem für Bildkonferenzen beschrieben, mit dem eine Arbeitsplatzkonferenz durchgeführt werden kann. Alle Teilnehmer werden hierbei gemeinsam auf einem Monitor dargestellt, wobei zahlreiche Varianten und Kombinationen von Großbildern und Kleinbildern denkbar sind. Die Anzahl der dargestellten Bilder entspricht hierbei der Anzahl der Teilnehmer.

Aufgabe der Erfindung ist es, ein Videokonferenzsystem anzugeben, bei dem die Anzahl der Teilnehmer bei gleicher Darstellungsgröße größer ist als bisher. Ferner ist insbesondere der Schaltungsaufwand gering zu halten.

Die Aufgabe wird durch die im Patentanspruch 1 angegebenen Merkmale gelöst.

Da es unnötig ist, daß sich ein Teilnehmer - zumindest ständig -selber auf dem Bildschirm wahrnimmt, werden nur jeweils die Partner dargestellt. Hierzu ist es jedoch notwendig, für jeden Teilnehmer ein spezielles Vollbild zu rekonstruieren.

Aus Aufwandsgründen ist es zweckmäßig, daß für jeden Teilnehmer ein Teilbildspeicher vorgesehen ist, in den mit einer niedrigeren Datenrate als beim Vollbild eingeschrieben wird und synchron mit der für ein Vollbild üblichen Datenrate ausgelesen wird.

Das Einschreiben von Teilbildern erfolgt dagegen unsynchronisiert und wird von der jeweiligen Kamera gesteuert. Hierbei ist eine Zeitbasis-Korrektur zwischen eingeschrieben und ausgelesenen Teilbildern nicht erforderlich.

Es ist ebenfalls möglich, nur einen einzigen Teilnehmer als Vollbild darzustellen.

Die Erfindung wird anhand von Ausführungsbeispielen näher erläutert.

Es zeigen

FIG 1 das Prinzipschaltbild eines Videokonferenzsystems mit 5 Teilnehmern,

FIG 2 die Umsetzung eines Videobildes in Teilbilder,

FIG 3 Beispiele der Zusammenfassung von Teilbildern zu einem Vollbild,

FIG 4 die Zeilenstruktur eines Videobildes,

FIG 5 die Zeilenstruktur eines Teilbildes,

FIG 6 eine Bildumsetzer-Einrichtung,

FIG 7 eine Videomischeinrichtung und

FIG 8 ein digitalisiertes Videokonferenzsystem.

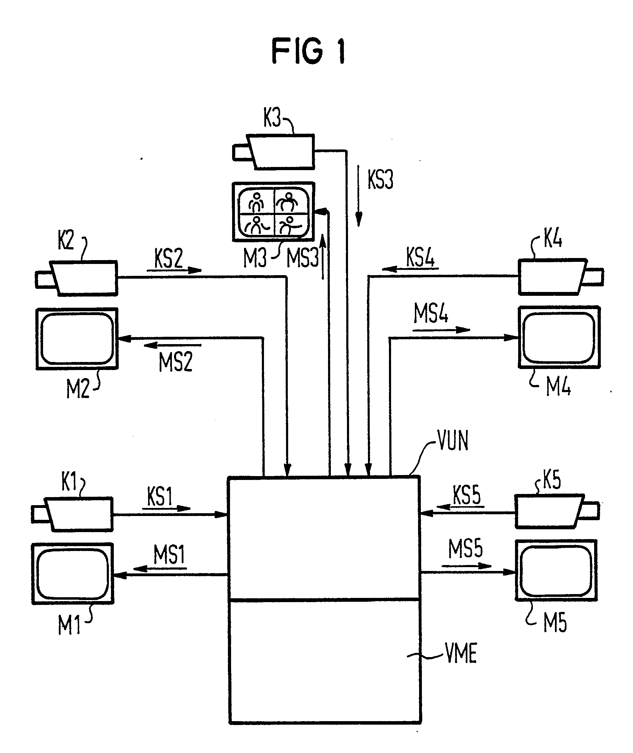

In Fig. 1 ist ein Videokonferenzsystem mit fünf Teilnehmerstationen dargestellt. Jede Teilnehmerstation besteht aus einer Kamera K1, K2,... und einem Monitor M1, M2,... Von den Kameras werden die Kamerasignale KS1 bis KS5, hierbei handelt es sich um die nach der jeweiligen Norm üblichen Videosignale, über ein vermittelndes Übertragungsnetz VUN zu einer Video-Mischeinrichtung VME übertragen. Die Video-Mischeinrichtung wandelt die nichtsynchronen Kamerasignale KS1 bis KS5 in synchrone Mischbildsignale MS1 bis MS5 um, die wieder in der Zeilenstruktur einem Videobild entsprechen und hier jeweils vier Teilbilder KB enthalten.

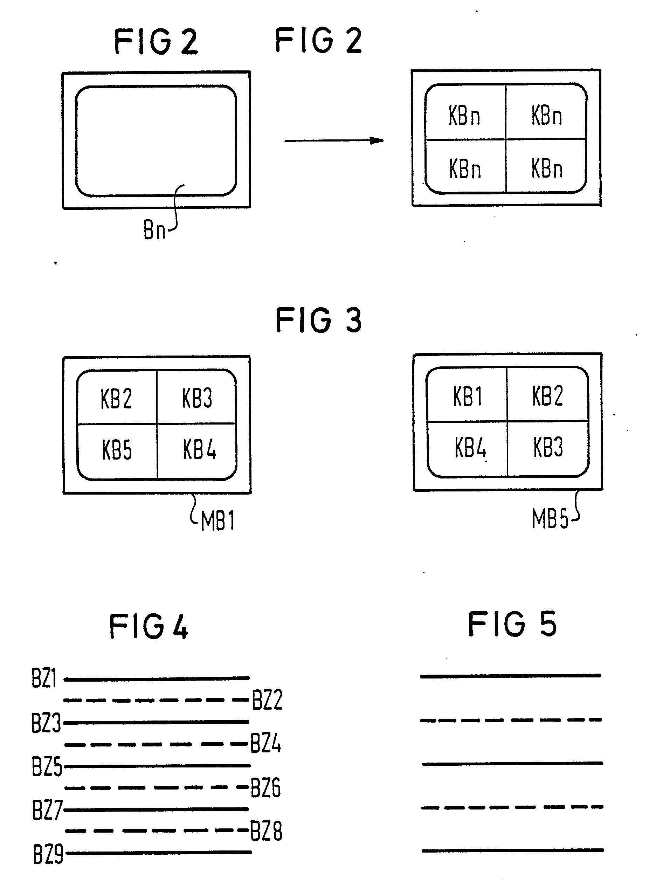

In Fig. 2 ist die Umsetzung eines von der Kamera gelieferten Videobildes Bn in vier gleiche Teilbilder KBn dargestellt. Jeweils vier unterschiedliche Teilbilder, beispielsweise die Teilbilder KB2 bis KB5, werden entsprechend Fig. 3 zu einem Mischbild MB1 zusammengefaßt, das zum Monitor M1 der ersten Teilnehmerstation als erstes Mischsignal MS1 übertragen wird. An die übrigen Teilnehmerstationen werden entsprechende Mischbilder übertragen, die jeweils das von der eigenen Kamera gelieferte Teilbild nicht enthalten. In Fig. 3 ist als weiteres Beispiel das Mischbild MB5 für die fünfte Teilnehmerstation dargestellt.

Die Umsetzung der originalen Teilbilder in Videobilder soll so erfolgen, daß ein Mischbild MB wieder die Zeilenstruktur eines üblichen Vollbildes aufweist. Eine Umsetzung wird mit digitalisierten Signalen durchgeführt. Dies bedeutet, daß sowohl in ho rizontaler Richtung als auch in vertikaler Richtung die Anzahl der Bildpunkte halbiert wird. In horizontaler Richtung erfolgt eine Abtastung des analogen Kamerasignals KS nach einer Tiefpaßfilterung mit der halben üblichen Abtastrate. In vertikaler Richtung muß die Anzahl der Zeilen entsprechend verkleinert werden, dies kann dadurch erfolgen, daß jeweils nur die Zeilen eines jeden zweiten Halbbildes eingeschrieben werden. Vorteilhafter ist es jedoch, wenn eine vertikale Filterung durchgeführt wird. Die Auflösung wird hierbei beträchtlich verbessert.

In Fig. 4 ist die Zeilenstruktur eines Vollbildes dargestellt. Die Zeilenanzahl eines Teilbildes wird entsprechend Fig. 5 auf die Hälfte reduziert Dies ist beispielsweise auch hierdurch möglich, daß jeweils von jedem ersten Halbbild nur jede zweite Bildzeile BZ1, BZ3, BZ5,... verwendet wird und die dazwischenliegenden Bildzeilen durch Interpolation aus jedem zweiten Halbbild jeweils zwei aufeinander folgenden Bildzeilen BZ2 und BZ4, BZ6 und BZ8 gewonnen werden. Bei einem dargestellten Mischbild MB sind die in Fig. 5 gezeichneten Bildzeilen wieder auf dem ursprünglichen Abstand zueinander reduziert.

Wenn das Mischbild aus sechs anstelle von vier Teilbildern besteht, dann werden die einzelnen Teilbilder im Hochformat dargestellt. Die Umsetzung der Bildpunkte bleibt hierbei gleich, jedoch werden die Teilbilder an den Rändern beschnitten. Bei der Darstellung von neun Teilbildern erfolgt eine Reduzierung der Bildpunkte in horizontaler Richtung auf 1/3, ebenso wird die Zeilenanzahl auf 1/3 reduziert.

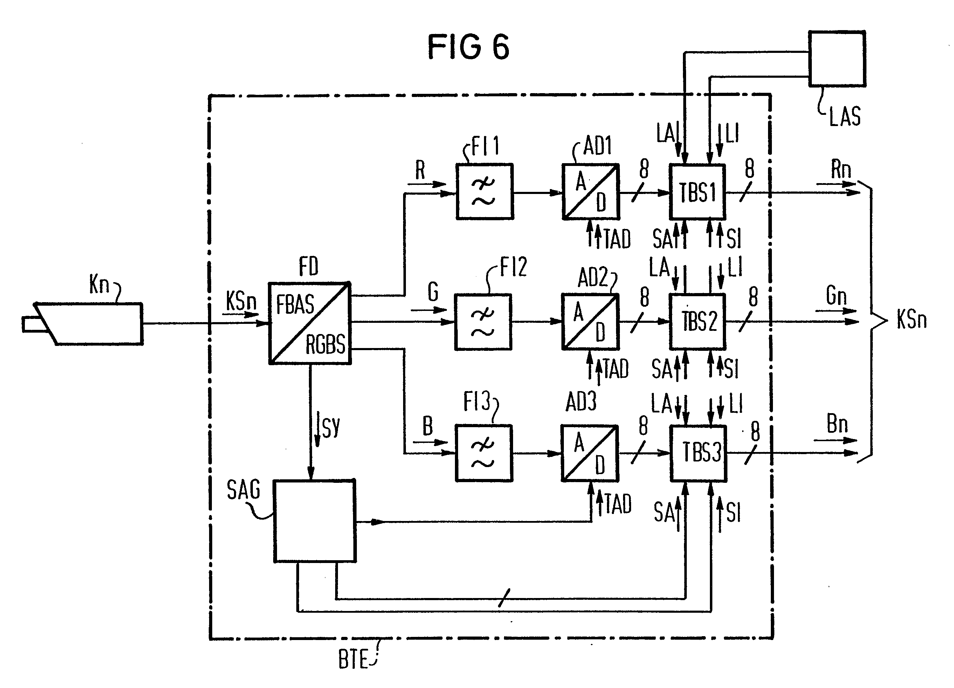

In Fig. 6 ist eine Bildumsetzereinrichtung dargestellt. Das von der Kamera Kn gelieferte Kamerasignal KSn wird einem Farbsignal-Decoder FD zugeführt, dessen Farbausgänge über Tiefpaßfilter Fl1 bis Fl3 Analog-Digital-Umsetzern AD1 bis AD3 zugeführt werden. An die Ausgänge eines Analog-Digital-Umsetzers ist jeweils ein Teilbildspeicher TBS1 bis TBS3 angeschaltet. An den Ausgängen der Teilbildspeicher werden synchron die zu einem Videosignal gehörenden Farbsignale Rn, Gn und Bn abgegeben. Das Einschreiben in die Teilbildspeicher wird von einer Schreibadressen-Steuerung SAS gesteuert, die von den Synchronimpulsen SY des Kamerasignals synchronisiert wird. Das Auslesen aus den Teilbildspeichern wird hiervon unabhängig von einer Leseadressensteuerung LAS bestimmt.

Das Kamerasignal wird im Farbsignal-Decoder in seine Komponenten Rot R, Grün G und Blau B zerlegt. Jede dieser Komponenten durchläuft ein Tiefpaßfilter Fl1 bis Fl3, wird anschließend mit dem Abtasttakt abgetastet und digitalisiert. Die digitalisierten Abtastwerte werden von einem Schreibadressen-Signal SA gesteuert mit einem Schreibimpuls SI in jeweils einen der Teilbildspeicher TBS1 bis TBS3 eingeschrieben. Die Schreibadresse und den Schreibimpuls liefert die Schreibadressen-Steuerung SAS. Die den Farbkomponenten R, G und B entsprechenden Abtastwerte werden synchron aus den Teilbildspeichern ausgelesen. Dies gilt für sämtliche Bildumsetzer-Einrichtungen, daher ist nur eine einzige Leseadressen-Steuerung LAS erforderlich, die die Leseadresse LA und den Leseimpuls LI liefert. Es ist selbstverständlich möglich, das analoge Videosignal auch in eine Luminanz-Komponente und in zwei Farbdifferenzsignale aufzuteilen und abzutasten. Anstelle einer Bandbegrenzung durch Tiefpaßfilter kann natürlich auch eine digitale Interpolation oder Filterung sowohl in horizontaler als auch in vertikaler Richtung vorgenommen werden. Die Reduktion der Zeilenanzahl erfolgt hier beispielsweise, indem nur jedes zweite Halbbild eingeschrieben wird.

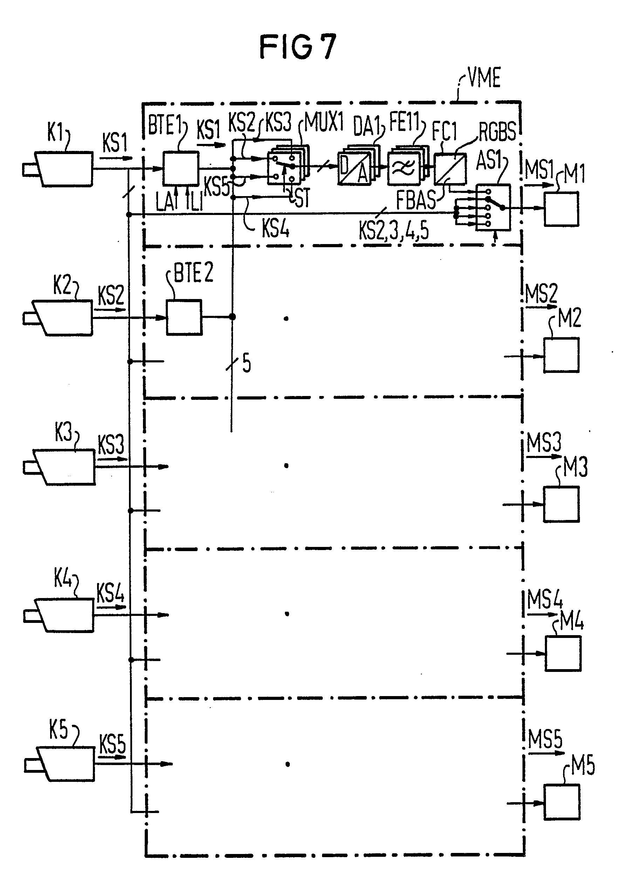

In Fig. 7 ist die Videomischeinrichtung VME mit den Kameras K1 bis K5 und den Monitoren M1 bis M5 dargestellt. Auf die Darstellung des Vermittlungssystems und der Übertragungsstrecken wurde der Übersichtlichkeit halber verzichtet. Für die erste Kamera K1 wurden die Einrichtungen der Video-Mischeinrichtung ausführlich dargestellt. Diese bestehen aus der Reihenschaltung von einer der Bildumsetzer-Einrichtungen BTE1, einer Multiplexeinrich tung MUX1, einer Digital-Analog-Umsetzereinrichtung DA1, einer Filtereinrichtung FE, einem Farbcoder FC 1 und einem Auswahlschalter AS1. An den Ausgang des Auswahlschalters ist der Monitor M1 angeschaltet.

Wie bereits beschrieben, wird in der Bildumsetzer-Einrichtung BTE1 ein digitales Kamerasignal erzeugt. Durch Auslesen der Teilbildspeicher mit dem Vollbildtakt werden hier während eines Vollbildes jeweils vier identische Teilbilder abgegeben. Jeder Multiplexeinrichtung werden sämtliche Teilbilder zugeführt, die von den Kameras erzeugt werden. Das Zusammenfügen zu einem Mischbild geschieht durch die jeweilige Multiplexeinrichtung MUX durch dessen spezielle Verdrahtung oder Steuerung mittels eines Steuertaktes ST. Jede Multiplexeinrichtung enthält drei Ebenen entsprechend den drei Komponenten des Videosignals. Die digitalen Abtastwerte werden in der Digital-Analog-Umsetzereinrichtung DA1 wiederum in analoge Signale umgesetzt, die gefiltert und im Farbcoder FC1 wieder in ein übliches, beispielsweise ein PAL-Videosignal, rückumgesetzt werden. Gibt die Kamera bereits Farbkomponenten-Signale ab und ist der Monitor für die Verarbeitung dieser Signale geeignet, dann können natürlich die entsprechenden Umsetzereinrichtungen entfallen.

In derselben Weise werden die Mischbilder für die anderen Monitore erzeugt. Sämtliche Multiplexer arbeiten dabei vorteilhafterweise synchron. Die unterschiedlichen Mischbilder werden durch unterschiedliches Anschalten der Teilbilder an die Multiplexereingänge erzeugt. Außerdem ist noch jeweils ein Auswahlschalter AS1,... vorgesehen, über den anstatt eines Mischbildes eines der von den Kameras gelieferten Original-Vollbilder dargestellt werden kann. Die Multiplexeinrichtungen können natürlich auch so erweitert werden, daß anstelle des Teilbildes eines Teilnehmers das eigene Teilbild darstellbar ist.

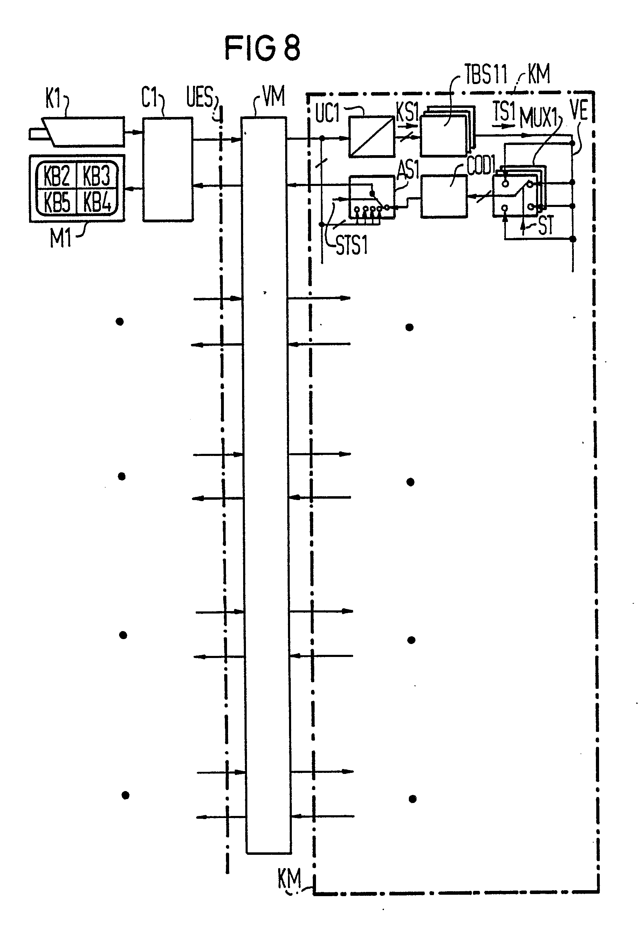

In Fig. 8 ist ein Videokonferenzsystem mit digitaler Signalverarbeitung dargestellt. Die Kamera und der Monitor, beispielsweise K1 und M1, einer Teilnehmereinrichtung sind über einen Codec C1 (Codierer-Decodierer) und weitere Übertragungseinrichtungen mit einer Vermittlung VM verbunden. An diese ist eine Konferenz-Mischeinrichtung KM angeschaltet. Für jeden Teilnehmer ist ein Umcodierer UC1 vorgesehen, der aus dem Original-Videobild ein Teilbild erzeugt. Der an den Ausgang des Umcodierers angeschlossene Teilbildspeicher TBS11 enthält wieder drei Ebenen für die Farbkomponenten; sämtliche Teilbildsignale TS1, werden über eine Vielfach-Einrichtung VE wieder der Multiplexeinrichtung MUX1 zugeführt, die über den Steuertakt ST ein entsprechendes Mischbild erzeugt. Der Ausgang der Multiplexeinrichtung MUX1 ist mit dem Eingang eines Codierers COD1 verbunden, der die Daten in eine für die Übertragung geeignete Form umsetzt. Über einen Auswahlschalter AS1 kann wiederum über ein Steuersignal STS1 zwischen einem Mischbild und einem der Original-Vollbilder gewählt werden.

Auch hier erfolgt das Auslesen aus dem Teilbildspeicher TBS11 wieder synchron, während das Einschreiben unsynchronisiert erfolgt. Dies hat den Vorteil, daß die Videoquellen nicht synchronisiert zu werden brauchen, keine Zeitbasis-Korrektor erforderlich ist und auch nur Teilbildspeicher benötigt werden. Jeder Teilbildspeicher braucht hierbei nur den Speicherumfang für ein bereits datenreduziertes Teilbild aufweisen. Wegen des unsynchronisierten Einschreibens kann es bei Bewegungen hierdurch zwar zu geringfügigen Verzerrungen kommen, wenn Abtastwerte aus verschiedenen ursprünglich aufeinanderfolgenden Teilbildern gleichzeitig im Teilbildspeicher während des Auslesens vorhanden sind, d. h. sich die Bildanfänge des eingelesenen gegenüber dem ausgelesenen Teilbild verschoben haben. Die ausgelesenen Abtastwerte bleiben natürlich weiterhin gespeichert. Die Bewegungsstörungen lassen sich selbstverständlich bei einer Vergrößerung des Speichervolumens um ein Halb-Teilbild vermeiden. Durch die asynchrone Arbeitsweise wird dann beispielsweise ein Halb-Teilbild zweimal ausgelesen oder unterdrückt. Die Auswahlschalter AS1,... können natürlich auch durch das Koppelfeld der Vermittlungseinrichtung ersetzt werden.

**Ansprüche**

1. Videokonferenzsystem mit einer Bildkonferenz-Vermittlungseinrichtung, an die mehrere Teilnehmereinrichtungen, die jeweils eine Kamera (K1, K2,...) und einen Monitor (M1, M2,...) umfassen, angeschlossen sind, und mit einer Videomischeinrichtung zum Zusammenfassen von mehreren Kamerasignalen (KS1, KS2,...) zu einem aus mehreren Teilbildern bestehenden Vollbild, **dadurch gekennzeichnet,** daß bei n-Teilnehmereinrichtungen n unterschiedliche Mischbilder mit jeweils n - 1 Teilbildern erzeugt werden.

2. Videokonferenzanlage nach Anspruch 1, **dadurch gekennzeichnet,** daß für jedes darzustellende Teilbild ein Teilbildspeicher (TBS1, TBS2,...) vorgesehen ist, daß entsprechend der Anzahl von darzustellenden Teilbildern (TB1, TB2,...) eine Datenreduktion vor dem Einschreiben in jeweils einen Teilbildspeicher (TBS1, TBS2,...) oder beim Auslesen aus den Teilbildspeichern derart erfolgt, daß für das aus Teilbildern zusammengefaßte Mischbild (MB1, MB2,...) die verwendete Fernsehnorm gilt.

3. Videokonferenzanlage nach Anspruch 2, **dadurch gekennzeichnet,** daß das Einlesen in die Teilbildspeicher (TBS1, TBS2,...) jeweils unsynchronisiert erfolgt und daß das Auslesen aus allen Teilbildspeichern (TB1, TB2,...) synchronisiert erfolgt.

4. Videokonferenzanlage nach Anspruch 3, **dadurch gekennzeichnet,** daß alle Teilbilder (TB1, TB2,...) mehrfach entsprechend der Norm des Vollbildes ausgelesen werden und daß synchron arbeitende Multiplexeinrichtungen (ME1, ME2,...) vorgesehen sind, die jeweils ausgewählte n - 1 Teilbilder zu einem Mischbild zusammenfassen.

5. Videokonferenzsystem nach einem der vorhergehenden Ansprüche, **dadurch gekennzeichnet,** daß eine vertikale Filterung zur Zeilenreduktion vorgesehen ist.

6. Videokonferenzsystem nach einem der vorhergehenden Ansprüche 1 bis 4, **dadurch gekennzeichnet,** daß jeweils 5 oder 7 Teilnehmer vorgesehen sind.

7. Videokonferenzsystem nach Anspruch 6, **dadurch gekennzeichnet,** daß eine Zeilenreduktion um den Faktor 2 durchgeführt wird, indem nur jede zweite Zeile (BZ1, BZ3, BZ5,...) jedes ersten Halbbildes eingeschrieben wird und daß jeweils zwei aufeinanderfolgende Zeilen (BZ2 und BZ4, BZ6 und BZ8,...) jedes zweiten Halbbildes zu einer neuen dazwischenliegenden Zeile eines Teilbildes durch Interpolation zusammengefaßt werden oder
daß nur jedes zweite Halbbild eingeschrieben wird.

8. Videokonferenzsystem nach einem der vorhergehenden Ansprüche, **dadurch gekennzeichnet,**
daß jede Kamera über Vermittlungseinrichtungen an jeweils eine Bildumsetzer-Einrichtung BTE angeschaltet ist, die eine Digitalisierung des Kamerasignals (KS) durchführt und gegebenenfalls eine Zerlegung in Videokomponenten durchführt,
daß eine Multiplexeinrichtung (MUX) an den Ausgang der Bildumsetzer-Einrichtung angeschaltet ist,
daß eine Digital-Analog-Umsetzereinrichtung mit nachfolgender Filterung und ein Farbcodierer (FC) zur Umsetzung in ein gewünschtes Videosignal vorgesehen ist,
daß ein Auswahlschalter an den Ausgang des Farbcoders angeschal tet ist, dem auch die Kamerasignale (KS1 bis KS5) zugeführt sind und
daß jeweils das Mischbild (MS1) oder eines der Kamerasignale (KS1 bis KS5) auf dem Monitor M1 darstellbar sind.

9. Videokonferenzsystem nach einem der vorhergehenden Ansprüche 1 bis 7,
**dadurch gekennzeichnet,**
daß die Teilnehmereinrichtungen über einen Codec (C1) zur Umsetzung des Kamerasignals (KS) in ein digitales Kamerasignal und zur Umsetzung eines digital übertragenen Mischbildes in ein analoges Mischbild an eine Vermittlung (VM) angeschlossen ist und daß eine Konferenz-Mischeinrichtung (KM) der Vermittlung (VM) zugeordnet ist, die jeweils einen Teilbildspeicher (TBS11), eine Multiplexeinrichtung (MUX1) zur Erzeugung eines Mischbildes (MB) und einem Auswahlschalter (AS1) zur wahlweisen Darstellung des Mischbildes (MB1) oder eines Original-Videobildes enthält.

10. Videokonferenzsystem nach einem der vorhergehenden Ansprüche,
**dadurch gekennzeichnet,**
daß die gesamte Speicherkapazität von n - 1 Teilbildspeichern (TBS1, TBS2, der eines Vollbildspeichers entspricht.

11. Videokonferenzsystem nach einem der vorhergehenden Ansprüche, **dadurch gekennzeichnet,**
daß die Tonsignale entsprechend der Lage der zugehörigen Teilbilder zu einem Stereo-Tonsignal zusammengefaßt werden.

# FIG 1

# FIG 2    FIG 2

Bn

KBn | KBn
KBn | KBn

# FIG 3

KB2 | KB3
KB5 | KB4

MB1

KB1 | KB2
KB4 | KB3

MB5

# FIG 4

BZ1
———————————— BZ2
BZ3
———————————— BZ4
BZ5
———————————— BZ6
BZ7
———————————— BZ8
BZ9

# FIG 5

FIG 6

# FIG 7

# FIG 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | NACHRICHTENTECHNISCHE ZEITSCHRIFT NTZ, Band 38, Nr. 10, Oktober 1985, Seiten 690-692,694-695, Berlin, DE; G. ROMAHN et al.: "Bildfernsprechkonferenz – Erste Erfahrungen mit einem Multipoint-Experimentalsystem" * Seite 692, linke Spalte, Absätze 2,3; Seite 694, linke Spalte, Absatz 3 * | 1-4,6, 10,11 | H 04 N 7/15 |
| Y | IDEM --- | 5,7-9 | |
| X | TELCOM REPORT, Band 9, Nr. 5, September/Oktober 1986, Seiten 284-288, Erlangen, DE; P. KLEIN: "Telekommunikation von Angesicht zu Angesicht" * Seite 287, linke Spalte, Absatz 3 * --- | 1 | |
| D,Y | DE-A-3 507 152 (HEINRICH-HERTZ INSTITUT) * Ansprüche 1-5; Seite 11, Zeile 21 – Seite 12, Zeile 9; Seite 14, Zeilen 11-17; Seite 18, Zeile 10 – Seite 19, Zeile 24 * --- | 5 | RECHERCHIERTE SACHGEBIETE (Int. Cl.5) H 04 N 7/00 |
| Y | PHILIPS RESEARCH REPORTS, Band 28, Nr. 4, August 1973, Seiten 377-390, Eindhoven, NL; M.C.W. VAN BUUL et al.: "Standards conversion of a TV signal with 625 lines into a videophone signal with 313 lines" * Seite 383, Absätze 5-8 * --- | 7 | |
| Y | WO-A-8 707 462 (BELL) * Seite 1, Zeile 30 – Seite 5, Zeile 25; Seite 17, Zeilen 12-18; Seite 19, Zeilen 17-20 * ---                          -/- | 7,8 | |

Der vorliegende Recherchenbericht wurde für alle Patentansprüche erstellt

| Recherchenort | Abschlußdatum der Recherche | Prüfer |
|---|---|---|
| DEN HAAG | 30-10-1989 | DE ROECK A.F.A. |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | IEEE INTERNATIONAL CONFERENCE ON COMMUNICATIONS '87, COMMUNICATIONS - SOUND TO LIGHT, PROCEEDINGS, Seattle, Washington, 7.-10. Juni 1987, Band 2, Seiten 30B.3.1 - 30B.3.4, IEEE, New York, US; S.C. MERRIMAN: "High quality digital video conferencing at 140 MB/S" * Seite 30B.3.1, linke Spalte, Absatz 2 * <br><br>--- | 9 | |
| A | FUNKSCHAU, Band 57, Nr. 24, November 1985, Seiten 49-51, München, DE; W. BAIER: "Von Studio zu Studio mit 2 MBit/s" <br><br>----- | | |
| | | | RECHERCHIERTE SACHGEBIETE (Int. Cl.5) |

Der vorliegende Recherchenbericht wurde für alle Patentansprüche erstellt

| Recherchenort | Abschlußdatum der Recherche | Prüfer |
|---|---|---|
| DEN HAAG | 30-10-1989 | DE ROECK A.F.A. |